# EUROPEAN PATENT SPECIFICATION

(11) **EP 3 088 991 B1**
(45) Date of publication and mention of the grant of the patent: **25.12.2019**
(21) Application number: 15166020.6
(22) Date of filing: 30.04.2015
(51) Int. Cl.: G06F 3/01, G06F 1/16, G06F 3/0481, G02B 27/01, G06F 3/0484, G06F 3/03

(54) **WEARABLE DEVICE AND METHOD FOR ENABLING USER INTERACTION**
TRAGBARE VORRICHTUNG UND VERFAHREN ZUR ERMÖGLICHUNG VON BENUTZERINTERAKTION
DISPOSITIF PORTABLE ET PROCÉDÉ PERMETTANT UNE INTERACTION UTILISATEUR

(43) Date of publication of application: 02.11.2016
(73) Proprietor: TP Vision Holding B.V., 1097 JB Amsterdam (NL)
(72) Inventor: DE MEYER, Eline, B-9052 Ghent (BE); DECLEER, Patrick Ludo Jeremi, B-9052 Ghent (BE); JHA, Shil Kumar, 9052 Ghent (BE)
(74) Representative: DREISS Patentanwälte PartG mbB

(56) References cited:
- EP-A1- 2 372 512
- EP-A2- 1 967 941
- WO-A1-2014/147686
- US-A1- 2012 249 468
- US-A1- 2013 050 069
- US-A1- 2013 257 692
- US-B1- 8 836 768

## Description

### Field of the invention

The invention relates to a wearable device for enabling user interaction.

The invention further relates to a method of enabling user interaction.

The invention also relates to a computer program product enabling a wearable device to perform a method of enabling user interaction.

### Background of the invention

Such a device is known from US2014/0266988, for example. US2014/0266988 discloses a pair of eyeglasses with a frame and lenses mounted on the frame. A computer processor is mounted on the eyeglasses together with a plurality of cameras and a digital projection system. In one application, a virtual keyboard is shown by the eyeglasses. The smart glasses are configured to detect hand movements and gestures so that the user can interact with virtual content displayed by the eyeglasses.

A drawback of this device is that it does not facilitate user interaction with 3D objects or 3D interaction spaces shown on a display device, e.g. a TV.

US 2013/050069 A1 provides apparatuses for use in displaying a user interface, comprising: a frame, a lens mounted with the frame, a first camera, a detector, and a processor configured to: process images received from the first camera and detected data received from the detector; detect from at least the processing of the image a hand gesture relative to a three dimensional (3D) space in a field of view of the first camera and the detection zone of the detector; identify, from the processing of the image and the detected data, virtual X, Y and Z coordinates within the 3D space of at least a portion of the hand performing the gesture; identify a command corresponding to the detected gesture and the three dimensional location of the portion of the hand; and implement the command.

EP 2 372 512 A1 relates to a vehicle user interface unit for a vehicle electronic device, comprising: a 3D display unit comprising a display, the 3D display unit being adapted to display, in operation, an image such that the image is perceived by a user as a virtual 3D image at least partially located in front of the display when the user observes the display; a display control unit adapted to control the generation of the image by the 3D display unit such that said virtual 3D image comprises a 3D object having at least two regions located in different spatial planes, each region comprising plural interaction elements; and an input unit adapted to detect the location of a user-controlled object and to interpret the detection of a predefined variation of the user-controlled object as a selection of one of said interaction elements comprised in the virtual 3D image.

US 2013/257692 A1 discloses that in a method, a processor generates a three dimensional interface with at least one virtual object, defines a stimulus of the interface, and defines a response to the stimulus. The stimulus is an approach to the virtual object with a finger or other end-effector to within a threshold of the virtual object. When the stimulus is sensed, the response is executed. Stimuli may include touch, click, double click, peg, scale, and swipe gestures. The apparatus includes a processor that generates a three dimensional interface with at least one virtual object, and defines a stimulus for the virtual object and a response to the stimulus. A display outputs the interface and object. A camera or other sensor detects the stimulus, e.g. a gesture with a finger or other end-effector, whereupon the processor executes the response. The apparatus may be part of a head mounted display.

EP 1 967 941 A2 discloses a computer implemented method for controlling an application based on the determined position of a user's hand. Positions of a user's body are expressed in three dimensional coordinates relative to an image detector. A plane segmenting a torso from a hand of the user's body is defined, and a position of the hand is determined based on the defined plane.

US 2012/249468 A1 discloses a virtual touchpad comprising a region in space positioned relative to a detected user with which a user interacts by hand movements as determined from frames of depth data obtained via a depth camera. The user's hand position or positions in the virtual touchpad region may be converted to coordinates, such as for posting to a message queue for use by an application. The computing device and depth camera may be incorporated into a robot that moves on a floor, with the depth camera angled upwardly and the virtual touchpad region tilted to facilitate user interaction.

US 8 836 768 B1 discloses user wearable eye glasses including a pair of two-dimensional cameras that optically acquire information for user gestures made with an unadorned user object in an interaction zone responsive to viewing displayed imagery, with which the user can interact. Glasses systems intelligently signal process and map acquired optical information to rapidly ascertain a sparse set of locations adequate to identify user gestures. The displayed imagery can be created by glasses systems and presented with a virtual on-glasses display, or can be created and/or viewed off-glasses. In some embodiments the user can see local views directly, but augmented with imagery showing internet provided tags identifying and/or providing information as to viewed objects. On-glasses systems can communicate wirelessly with cloud servers and with off-glasses systems that the user can carry in a pocket or purse.

WO 2014/147686 A1 discloses an information processing apparatus including circuitry that is configured to provide a user interface to control a plurality of controllable objects. The user interface is associated with a gesture recognition area that is defined by a predetermined detection area of a sensor. The gesture recognition area is divided into a plurality of gesture recognition sub-areas based on a number of the controllable objects to be controlled by the user interface. The circuitry is further configured to detect a predetermined gesture within the predetermined detection area, determine the gesture recognition sub-area in which the predetermined gesture is detected, and perform an operation on one of the controllable objects based on the detected predetermined gesture and the determined gesture recognition sub-area in which the predetermined gesture is detected.

### Summary of the invention

It is a first object of the invention to provide a wearable device for enabling user interaction, which enables user interaction with 3D objects or 3D interaction spaces shown on a display device.

It is a second object of the invention to provide a method of enabling user interaction, which enables user interaction with 3D objects or 3D interaction spaces shown on a display device.

According to the invention, the first object is realized by a wearable device as defined in appending independent claim 1.

With the wearable device of the invention, a user is able to interact with 3D objects or 3D interaction spaces shown on a display device with the help of an at least partly transparent three-dimensional object displayed by the wearable device having transparent display means, e.g. smart glasses. The user moves a physical object within an area that corresponds to the at least partly transparent three-dimensional object when viewed through the transparent display means, e.g. to move a pointer within a 3D interaction space displayed on the display device. The transparent display means provides an indication whether the object is inside or outside the area, as this may be difficult to see at certain positions of the physical object.

Said physical object may be a finger. By using a user's finger, no additional object needs to be picked up by the user in order to interact with the display device. Known methods for finger detection using a camera can be used. Alternatively or additionally, the wearable device may support the use of a dedicated object, as this can be detected more easily, e.g. because it comprises a light source or has a surface with an easy-to-recognize pattern.

Said at least partly transparent three-dimensional object may be a cuboid. Although the three-dimensional object could have another shape, e.g. a sphere, a cuboid is most convenient, because sensor areas and display areas are often rectangles.

Said processor may be operative to display said indication at one or more positions which depend on a position of said physical object in said area. In this way, the user receives (additional) feedback where in the area the physical object is detected.

Said processor may be operative to display said indication on a face of said at least partly transparent three-dimensional object. In this way, the indication does not interfere with the visibility of the three-dimensional object and the physical object, but is also not so far removed from the three-dimensional object that the relation to the three-dimensional object becomes more difficult to perceive.

Said processor may be operative to determine an appearance of said indication in dependence on a distance between said face of said at least partly transparent three-dimensional object and said physical object in said area. In this way, the user receives (additional) feedback where in the area the physical object is detected.

Said data representing said three-dimensional position of said physical object may comprise x, y and z coordinates. Since it is the wearable device that determines the x, y and z coordinates in this embodiment, not much processing is required from the display device.

Said wearable device may further comprise means for allowing said user to view 3D images on a 3D display device using said transparent display means. Although 3D objects and 3D interaction spaces that are shown on a display device can be made to look 3D using 2D perspective projection, a user can perceive them better if the display device has 3D capabilities. If the display device is not an auto stereoscopic device, but supports 3D with glasses, the wearable device can advantageously include known shutter or polarized 3D glasses.

According to the invention, the second object is realized by a method of enabling user interactions, as defined in appending independent claim 9.

Preferable embodiments of the invention are defined in the appending dependent claims.

### Brief description of the Drawings

These and other aspects of the invention are apparent from and will be further elucidated, by way of example, with reference to the drawings, in which:

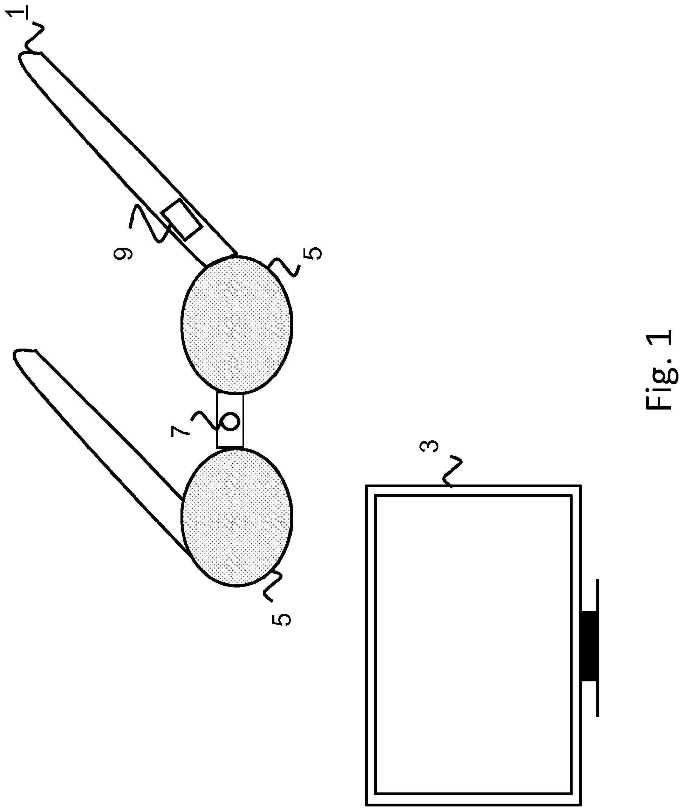

- Fig.1 is a block diagram of the wearable device of the invention;
- Fig.2 is a flow diagram of the method of the invention;
- Fig.3 shows a first example of an at least partly transparent three-dimensional object displayed by the wearable device of the invention;
- Fig.4 shows a second example of an at least partly transparent three-dimensional object displayed by the wearable device of the invention at a first instance;
- Fig.5 shows a second example of an at least partly transparent three-dimensional object displayed by the wearable device of the invention at a second instance; and
- Fig.6 shows a second example of an at least partly transparent three-dimensional object displayed by the wearable device of the invention at a third instance.

Corresponding elements in the drawings are denoted by the same reference numeral.

### Detailed description of the Drawings

The wearable device 1 for enabling user interaction comprises transparent display means 5 for displaying information while allowing a user to view a display device 3, a camera 7 facing the direction of the display device 3 (i.e. away from the user) and a processor 9. The processor 9 is operative to display an at least partly transparent three-dimensional object on the transparent display means 5 and use the camera 7 to detect a physical object in an area which corresponds to the at least partly transparent three-dimensional object when viewed through the transparent display means 5. The processor 9 is further operative to display an indication on the transparent display means 5 indicating whether the physical object is located in the area and enable user interaction with the display device 3 by sending data representing at least one of a three-dimensional position and a change in three-dimensional position of the physical object in the area to the display device 3. The display device 3 is a different device than the wearable device 1.

The display area of transparent display means 5 is transparent when not displaying any information. When a certain object is displayed on the transparent display means 5, this certain object is at least partly opaque or at least partly semi-transparent. When the dimensions on the at least partly transparent three-dimensional object are large compared to the dimensions of the display area of the transparent display means 5, the majority of the at least partly transparent three-dimensional object is preferably transparent or semi-transparent, thereby preventing that the user cannot see (much of) the display device 3.

The wearable device 1 may be a Google Glass, for example. The processor 9 may be a Texas Instruments OMAP 4430 processor, for example. The display device 3 may be a Television, monitor, tablet, laptop or mobile phone, for example. The display device 3 may display 2D or 3D images. The wearable device 1 may further comprise (not shown) at least one of a Flash memory, a RAM memory, a wireless module, an audio system, a battery and a charging connector. The transparent display means 5 may comprise a near-eye LCoS display or other projection-based display, for example. Preferably, the data representing at least one of a three-dimensional position and a change in three-dimensional position of the physical object in the area are sent to the display device 3 using a wireless module, e.g. a module complying to the IEEE 802.11 and/or Bluetooth standards. The camera 7 is preferably a 3D camera in order to make it easy to detect the physical object in a three-dimensional space. Alternatively, camera 7 may comprise two cameras, for example.

If the wearable device 1 is a Google Glass, the processor 9 may be suitably programmed with the help of Google's Android Software Development Kit and Google's Glass Development Kit. The at least partly transparent three-dimensional object may be pre-stored as an image with a transparent background or such an image may be generated on-the-fly, for example. This image may be added to a Card, a concept used in the Glass Development Kit, which is then shown to the user, for example. The indication, indicating whether the physical object is located in the area, may be added to the same image or may be added to a second image that is added to the same Card, for example. Many suitable object detection methods are known. If the object is a finger, a known finger detection method, e.g. as described in US 8,655,021, may be used.

In an embodiment, a mapping between the edges of the at least partly transparent three-dimensional object and positions of the camera sensor area is preconfigured for the specific model of wearable device 1, as this mapping may be dependent on the type of the camera and display means and on the position of the camera and display means on the wearable device 1. Alternatively or additionally, the mapping may be configured by the user of the wearable device 1. The three-dimensional position returned by the object detection method and the mapping are used to determine whether the physical object is located in the area which corresponds to the at least partly transparent display means. If the object is located in the area, the three-dimensional position returned by the object detection method is translated into a three-dimensional position of the three-dimensional object or into a change of three-dimensional position of the three-dimensional object compared to the last detected three-dimensional position. In case of the former, a detected position [50, 50, 50] of the camera sensor area may be translated into a position [20, 20, 20] when the three-dimensional object is a cuboid with a top-left-front edge point at position [30, 30, 30] of the camera sensor area, for example. The translated three-dimensional position and/or the change in three-dimensional position can then be sent to the display device 3. The (change in) position can be encoded in XML or binary format, for example, before it is sent to the display device 3.

In an embodiment, the data representing the three-dimensional position of the physical object comprises x, y and z coordinates. In the same or in a different embodiment, wearable device 1 further comprises means for allowing the user to view 3D images on a 3D display device using the transparent display means 5. These means may comprise the same components as found in known active (shutter) and/or passive (polarized) 3D glasses.

The data sent to the display device 3 may be used to navigate within a three-dimensional space displayed on the display device 3, for example. The three-dimensional space may comprise a collection of items, e.g. video or song titles, or may be a virtual world, for example. In case of the former, video titles stacked in the z direction may be grouped by first letter, genre, actor or director in the x and y directions and song titles stacked in the z direction may be grouped by first letter, genre or artist in the x and y directions, for example. In this way, a user could navigate to a desired group in the x and y directions and browse titles in this group by navigating in the z direction.

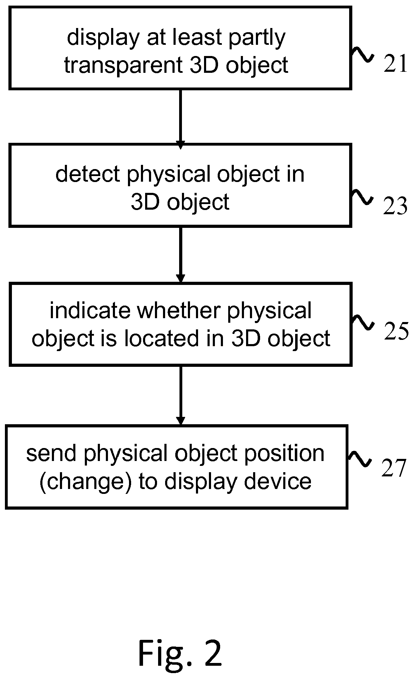

The method of enabling user interaction comprises a step 21 of displaying an at least partly transparent three-dimensional object on a transparent display means of a wearable device, see Fig.2. The method further comprises a step 23 of using a camera of the wearable device to detect a physical object in an area which corresponds to the at least partly transparent three-dimensional object when viewed through the transparent display means. This can be achieved, for example, by mapping the coordinates defining the edges of the at least partly transparent three-dimensional object with reference to the display area of the transparent display means to coordinates defining the edges of the area with reference the sensor area of the camera. Step 23 may comprise detecting more than one physical object, e.g. two fingers. Step 23 may further comprise determining how many objects, e.g. fingers, are located in the area. The method also comprises a step 25 of displaying an indication on the transparent display means indicating whether the physical object is located in the area. The method further comprises a step 27 of enabling user interaction with the display device by sending data representing a three-dimensional position and/or a change in three-dimensional position of the physical object in the area to the display device. Step 27 may comprise sending to the display device information representing how many objects, e.g. fingers, have been determined to be located in the area. Alternatively, step 27 may comprise determining the (change in) three-dimensional position in dependence on how many objects, e.g. fingers, have been determined to be located in the area. This can be used to improve the interaction with a displayed 3D object or 3D interaction space, e.g. by navigating the 3D interaction space at a different speed when two fingers have been detected compared to when one finger has been detected or by interacting with the 3D object in a different manner when two fingers have been detected compared to when one finger has been detected.

The method of the invention may be performed by a processor of a wearable device and/or by software (for) running on a processor of a wearable device.

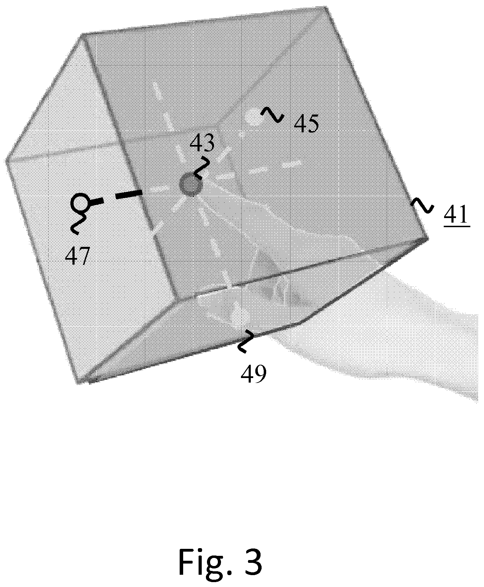

Fig.3 shows a first example of an at least partly transparent three-dimensional object 41 displayed by the wearable device of the invention. In the shown example, the physical object is a finger 43 and the at least partly transparent three-dimensional object 41 is a semi-transparent cuboid. In this embodiment, step 25 comprises displaying the indication on a face of the at least partly transparent three-dimensional object 41 and displaying the indication at one or more positions which depend on a position of the detected finger in the area. In particular, indications 45, 47 and 49, consisting of colored circles, are displayed on three faces of the cuboid: left, bottom and front. Lines may be displayed connecting the position of the finger 43 and the indications 45, 47 and 49. The left indication 47 depends on the y, z position of the finger 43. The bottom indication 49 depends on the x, z position of the finger 43. The front indication 45 depends on the x, y position of the finger 43. The color of at least one of the circles is changed when the finger 43 exits the area. Alternatively or additionally, at least one of the circles changes shape, e.g. into a square, when the finger 43 exits the area. In a favorable embodiment, when the finger 43 exits the area, the indication that corresponds to the face that is crossed is changed. For example, indication 47 may be changed when the finger 43 exits the area through the left face of the at least partly transparent three-dimensional object 41.

In the same or in a different embodiment, step 25 may comprise determining an appearance of the indication in dependence on a distance between the face of the at least partly transparent three-dimensional object and the physical object in the area. For example, the displayed circle and/or line turn gradually to red when the user approaches the corresponding face of the at least partly transparent three-dimensional object 41.

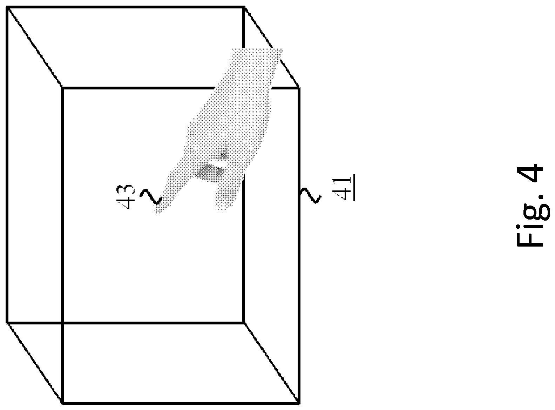

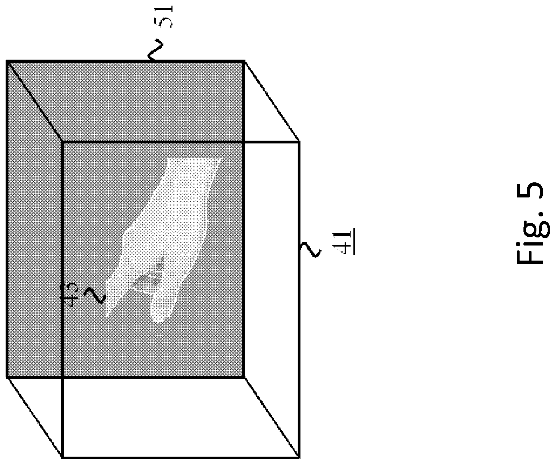

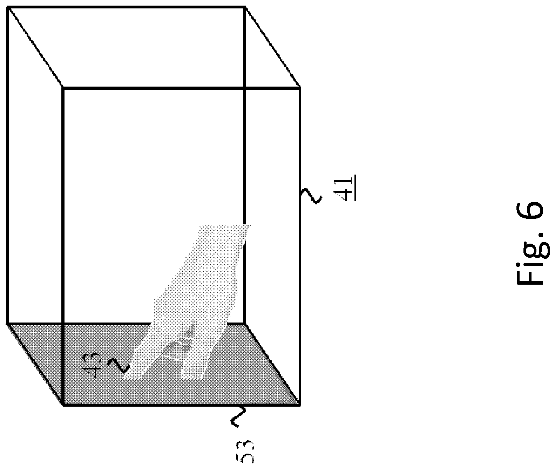

A second example is illustrated by Figs. 4, 5 and 6. In this second example, the physical object is again finger 43, the at least partly transparent three-dimensional object 41 is a cuboid with opaque edges and the indication consists of the appearance of the faces of the at least partly transparent three-dimensional object 41. In Fig. 4, all faces are transparent as a result of the finger 43 being detected inside the area. Fig. 5 shows the top of the finger 43 being outside the area behind the at least partly transparent three-dimensional object 41, which results in the finger 43 being detected outside the area. This is indicated by making the back face 51 opaque and colored. Alternatively, the back face 51 may be made only opaque or only colored. Instead of opaque, the back face 51 may be made semi-transparent. Instead of or in addition to being colored, the back face 51 may be drawn with a pattern. Fig. 6 shows the top of the finger 43 being outside the area left of the at least partly transparent three-dimensional object 41, which results in the finger 43 being detected outside the area. This is indicated by making the left face 53 opaque and colored. In the same or in a different embodiment, the color of a face may (further) depend on the distance between this face and the finger 43.

In the above examples, a single at least partly transparent three-dimensional object 41 is displayed. In another embodiment, two at least partly transparent three-dimensional objects are displayed simultaneously. For example, the display device can show two 3D interaction spaces, two 3D objects or a 3D interaction space and a 3D object in split screen. A finger of each hand can be detected in areas corresponding to each of the two at least partly transparent three-dimensional objects simultaneously.

While the invention has been described in connection with preferred embodiments, it will be understood that modifications thereof within the principles outlined above will be evident to those skilled in the art, and thus the invention is not limited to the preferred embodiments but is intended to encompass such modifications. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. The mere fact that certain measures are recited in mutually different dependent claims does not indicate that a combination of these measures cannot be used to advantage. 'Software' is to be understood to mean any software product stored on a computer-readable medium, such as a floppy disk, downloadable via a network, such as the Internet, or marketable in any other manner.

## Claims

1. A wearable device (1) for enabling user interaction, said wearable device (1) comprising:
transparent display means (5) for displaying information while allowing a user to view a display device (3), the display device (3) being a different device than the wearable device (1);
a camera (7) facing the direction of said display device (3); and
a processor (9) operative to display an at least partly transparent three-dimensional object (41), on said transparent display means (5), wherein said wearable device (1) being **characterized in that** said processor (9) is operative to:
- use said camera (7) to detect a physical object (43) inside an area which corresponds to said at least partly transparent three-dimensional object (41) when viewed through said transparent display means (5), a mapping between edges of said at least partly transparent three-dimensional object (41) and said area being configured;
- translate a detected position of said physical object (43) inside said area into a three-dimensional position relative to said at least partly transparent three-dimensional object (41);
- display an indication on said transparent display means (5) indicating whether said physical object (43), is located inside said area; and
- enable user interaction with said display device (3) by sending data representing at least one of a translated three-dimensional position and a change in translated three-dimensional position of said physical object (43) inside said area to said display device (3).

2. A wearable device as claimed in claim 1, wherein said physical object (43) is a finger.

3. A wearable device as claimed in claim 1 or 2, wherein said at least partly transparent three-dimensional object (43) is a cuboid.

4. A wearable device as claimed in any of the preceding claims, wherein said processor (9) is operative to display said indication at one or more positions which depend on a position of said physical object (43) inside said area.

5. A wearable device as claimed in any of the preceding claims, wherein said processor (9) is operative to display said indication on a face of said at least partly transparent three-dimensional object (41).

6. A wearable device as claimed in claim 5, wherein said processor (9) is operative to determine an appearance of said indication that gradually changes in dependence on a gradually changing distance between said face of said at least partly transparent three-dimensional object (41) and said physical object (43) inside said area.

7. A wearable device as claimed in any of the preceding claims, wherein said data representing said three-dimensional position of said physical object (43) comprises x, y and z coordinates.

8. A wearable device as claimed in any of the preceding claims, further comprising means for allowing said user to view 3D images on a 3D display device using said transparent display means (5).

9. A method of enabling user interaction, said method including the step of:
- displaying (21) an at least partly transparent three-dimensional object (41) on a transparent display means (5), of a wearable device (1) ; said method being **characterized by** the steps of:
- using (23) a camera of said wearable device to detect a physical object (43) inside an area which corresponds to said at least partly transparent three-dimensional object (41) when viewed through said transparent display : means (5), a mapping between edges of said at least partly transparent three-dimensional object (41) and said area being configured;
- translating a detected position of said physical object (43) inside said area into a three-dimensional position relative to said at least partly transparent three-dimensional object (43);
- displaying (25) an indication on said transparent display means (5) indicating whether said physical object (43), is located inside said area; and
- enabling (27) user interaction with a display device (3), the display device (3) being a different device than the wearable device (1), by sending data representing at least one of a translated three-dimensional position and a change in translated three-dimensional position of said physical object inside said area to said display device (3).

10. A method as claimed in claim 9, wherein said physical object (43) is a finger.

11. A method as claimed in claim 9 or 10, wherein said at least partly transparent three-dimensional object (41) is a cuboid.

12. A method as claimed in any of claims 9 to 11, wherein displaying (25) said indication comprises displaying said indication at one or more positions which depend on a position of said physical object (43) inside said area.

13. A method as claimed in any of claims 9 to 12, wherein displaying (25) said indication comprises displaying said indication on a face of said at least partly transparent three-dimensional object (41).

14. A method as claimed in claim 13, wherein displaying (25) said indication further comprises determining an appearance of said indication that gradually changes in dependence on a gradually changing distance between said face of said at least partly transparent three-dimensional object (41) and said physical object (43) in said area.

15. A computer program product enabling a processor of a wearable device of any of claims 1-8 perform the method of any of claims 9 to 14.

## Patentansprüche

1. Tragbare Vorrichtung (1) zur Benutzerinteraktion, wobei die tragbare Vorrichtung (1) Folgendes umfasst:
transparente Anzeigevorrichtungen (5) zur Anzeige von Informationen, während es einem Benutzer möglich ist, ein Anzeigegerät (3) zu betrachten, wobei das Anzeigegerät (3) eine andere Vorrichtung ist als die tragbare Vorrichtung (1);
eine Kamera (7), die in die Richtung des Anzeigegerätes (3) zeigt; und
einen Prozessor (9), der in der Lage, ein mindestens teilweise transparentes dreidimensionales Objekt (41) auf den transparenten Anzeigevorrichtungen (5) darzustellen, wobei die tragbare Vorrichtung (1) **dadurch gekennzeichnet ist, dass** der Prozessor (9) in der Lage ist:
- die Kamera (7) zu benutzen, um ein physisches Objekt (43) innerhalb eines Bereichs zu detektieren, der dem mindestens teilweise transparenten dreidimensionalen Objekt (41) entspricht, wenn er durch die transparenten Anzeigevorrichtungen (5) betrachtet wird, wobei ein Mapping zwischen Rändern des mindestens teilweise transparenten dreidimensionalen Objekts (41) und dem Bereich konfiguriert ist;
- eine detektierte Position des physischen Objekts (43) innerhalb dieses Bereichs in eine dreidimensionale Position relativ zu dem mindestens teilweise transparenten dreidimensionalen Objekt (41) umzuwandeln;
- eine Anzeige auf den transparenten Anzeigevorrichtungen (5) darzustellen, die anzeigt, ob sich das physische Objekt (43) innerhalb des Bereichs befindet; und
- die Benutzerinteraktion mit dem Anzeigegerät (3) zu ermöglichen, indem er Daten sendet, die mindestens eine umgewandelte dreidimensionale Position oder eine Änderung der umgewandelten dreidimensionalen Position des physischen Objekts (43) innerhalb des Bereichs in Bezug auf das Anzeigegerät (3) darstellen.

2. Tragbare Vorrichtung nach Anspruch 1, wobei das physische Objekt (43) ein Finger ist.

3. Tragbare Vorrichtung nach Anspruch 1 oder 2, wobei das mindestens teilweise transparente dreidimensionale Objekt (43) ein Quader ist.

4. Tragbare Vorrichtung nach einem der vorstehenden Ansprüche, wobei der Prozessor (9) in der Lage ist, die Anzeige an einer oder mehreren Positionen anzuzeigen, welche von einer Position des physischen Objekts (43) innerhalb des Bereichs abhängen.

5. Tragbare Vorrichtung nach einem der vorstehenden Ansprüche, wobei der Prozessor (9) in der Lage ist, die Anzeige auf einer Seite des mindestens teilweise transparenten dreidimensionalen Objekts (41) anzuzeigen.

6. Tragbare Vorrichtung nach Anspruch 5, wobei der Prozessor (9) in der Lage ist, ein Erscheinen der Anzeige zu bestimmen, welches sich in Abhängigkeit von einem sich schrittweise ändernden Abstand zwischen der Seite des mindestens teilweise transparenten dreidimensionalen Objekts (41) und dem physischen Objekt (43) in dem Bereich schrittweise verändert.

7. Tragbare Vorrichtung nach einem der vorstehenden Ansprüche, wobei die Daten, welche die dreidimensionale Position des physischen Objekts (43) darstellen, x-, y-und z-Koordinaten umfassen.

8. Tragbare Vorrichtung nach einem der vorstehenden Ansprüche, zudem umfassend Vorrichtungen, die es dem Benutzer ermöglichen, mithilfe der transparenten Anzeigevorrichtungen (5) 3D-Bilder auf einer 3D-Anzeigevorrichtung zu sehen.

9. Verfahren zur Benutzerinteraktion, wobei das Verfahren folgenden Schritt umfasst:
- Darstellen (21) eines mindestens teilweise transparenten dreidimensionalen Objekts (41) auf transparenten Anzeigevorrichtungen (5) einer tragbaren Vorrichtung (1); wobei das Verfahren durch folgende Schritte gekennzeichnet ist:
- Benutzen (23) einer Kamera der tragbaren Vorrichtung zur Detektion eines physischen Objekts (43) innerhalb eines Bereichs, der dem mindestens teilweise transparenten dreidimensionalen Objekt (41) entspricht, wenn er durch die transparenten Anzeigevorrichtungen (5) betrachtet wird, wobei ein Mapping zwischen Rändern des mindestens teilweise transparenten dreidimensionalen Objekts (41) und dem Bereich konfiguriert ist;
- Umwandeln einer detektierten Position des physischen Objekts (43) innerhalb dieses Bereichs in eine dreidimensionale Position relativ zu dem mindestens teilweise transparenten dreidimensionalen Objekt (43);
- Darstellen (25) einer Anzeige auf den transparenten Anzeigevorrichtungen (5), die anzeigt, ob sich das physische Objekt (43) innerhalb des Bereichs befindet; und
- Ermöglichen (27) der Benutzerinteraktion mit einem Anzeigegerät (3), wobei das Anzeigegerät (3) eine andere Vorrichtung ist als die tragbare Vorrichtung (1),
durch das Senden von Daten, die mindestens eine umgewandelte dreidimensionale Position oder eine Änderung der umgewandelten dreidimensionalen Position des physischen Objekts innerhalb des Bereichs in Bezug auf das Anzeigegerät (3) darstellen.

10. Verfahren nach Anspruch 9, wobei das physische Objekt (43) ein Finger ist.

11. Verfahren nach Anspruch 9 oder 10, wobei das mindestens teilweise transparente dreidimensionale Objekt (41) ein Quader ist.

12. Verfahren nach Anspruch 9 bis 11, wobei das Darstellen (25) der Anzeige das Darstellen der Anzeige an einer oder mehreren Positionen umfasst, welche von einer Position des physischen Objekts (43) innerhalb des Bereichs abhängen.

13. Verfahren nach Anspruch 9 bis 12, wobei das Darstellen (25) der Anzeige das Darstellen der Anzeige auf einer Seite des mindestens teilweise transparenten dreidimensionalen Objekts (41) umfasst.

14. Verfahren nach Anspruch 13, wobei das Darstellen (25) der Anzeige zudem das Bestimmen eines Erscheinens der Anzeige umfasst, welches sich in Abhängigkeit von einem sich schrittweise ändernden Abstand zwischen der Seite des mindestens teilweise transparenten dreidimensionalen Objekts (41) und dem physischen Objekt (43) in dem Bereich schrittweise verändert.

15. Computerprogrammprodukt, das es einem Prozessor einer tragbaren Vorrichtung nach einem der Ansprüche 1 bis 8 ermöglicht, das Verfahren nach einem der Ansprüche 9 bis 14 auszuführen.

## Revendications

1. Dispositif (1) susceptible d'être porté pour permettre une interaction utilisateur, ce dispositif (1) comprenant:
des moyens d'affichage transparents (5) destinés à afficher une information en permettant à un utilisateur de visionner un dispositif d'affichage (3), le dispositif d'affichage (3) étant un dispositif différent du dispositif (1) susceptible d'être porté,
une caméra (7) faisant face à la direction du dispositif d'affichage (3), et
un processeur (9) susceptible d'afficher un objet tridimensionnel (41) au moins partiellement transparent sur les moyens d'affichage transparents (5), le dispositif (1) susceptible d'être porté,
étant **caractérisé en ce que**
le processeur (9) est susceptible:
- d'utiliser la caméra (7) pour détecter un objet physique (43) à la partie interne d'une zone qui correspond à l'objet tridimensionnel (41) au moins partiellement transparent lorsqu'il est visionné au travers des moyens d'affichage transparents (5), une cartographie entre des bords de l'objet tridimensionnel (41) au moins partiellement transparent, et la zone étant configurée:
- de traduire la position détectée de l'objet physique (43) à la partie interne de la zone en une position tridimensionnelle par rapport à l'objet tridimensionnel (41) au moins partiellement transparent,
- d'afficher sur les moyens d'affichage transparents (5) une indication indiquant si cet objet physique (43) est situé à la partie interne de la zone, et
- de permettre une interaction utilisateur avec le dispositif d'affichage (3) en transmettant des données représentant la position tridimensionnelle traduite et/ou une modification de la position tridimensionnelle traduite de l'objet physique (43) à la partie interne de la zone au dispositif d'affichage (3).

2. Dispositif susceptible d'être porté conforme à la revendication 1, dans lequel l'objet physique (43) est un doigt.

3. Dispositif susceptible d'être porté conforme à la revendication 1 ou 2, dans lequel l'objet tridimensionnel (43) au moins partiellement transparent est un parallélépipède.

4. Dispositif susceptible d'être porté conforme à l'une quelconque des revendications précédentes, dans lequel le processeur (9) est susceptible d'afficher l'indication en au moins une position qui dépend de la position de l'objet physique (43) à la partie interne de la zone.

5. Dispositif susceptible d'être porté conforme à l'une quelconque des revendications précédentes, dans lequel le processeur (9) est susceptible d'afficher l'indication sur une face de l'objet tridimensionnel (41) au moins partiellement transparent.

6. Dispositif susceptible d'être porté conforme à la revendication 5, dans lequel le processeur (9) est susceptible de déterminer la présence de l'indication qui varie progressivement en fonction de la variation progressive de la distance entre la face de l'objet tridimensionnel (41) au moins partiellement transparent et l'objet physique (43) à la partie interne de la zone.

7. Dispositif susceptible d'être porté conforme à l'une quelconque des revendications précédentes, dans lequel les données représentant la position tridimensionnelle de l'objet physique (43) sont des coordonnées x, y et z.

8. Dispositif susceptible d'être porté conforme à l'une quelconque des revendications précédentes, comprenant en outre des moyens permettant à l'utilisateur de visionner des images 3D sur un dispositif d'affichage 3D en utilisant les moyens d'affichage transparents (5).

9. Procédé permettant une interaction utilisateur, ce procédé comprenant des étapes consistant à:
- afficher (21) un objet tridimensionnel (41) au moins partiellement transparent sur des moyens d'affichage transparents (5) d'un dispositif (1) susceptible d'être porté,
ce procédé étant **caractérisé en ce qu'**
il comprend des étapes consistant à:
- utiliser (23) une caméra du dispositif susceptible d'être porté pour détecter un objet physique (43) à la partie interne d'une zone qui correspond à l'objet tridimensionnel (41) au moins partiellement transparent lorsqu'il est visionné au travers des moyens d'affichage (5) au moins partiellement transparents, une cartographie entre des bords de l'objet tridimensionnel (41) au moins partiellement transparent et la zone étant configurée,
- traduire la position détectée de l'objet physique (43) à la partie interne de la zone en une position tridimensionnelle par rapport à l'objet tridimensionnel (43) au moins partiellement transparent,
- afficher (25) sur les moyens d'affichage transparents (5) une indication indiquant si l'objet physique (43) est situé à la partie interne de la zone, et
- permettre (27) une interaction utilisateur avec un dispositif d'affichage (3), le dispositif d'affichage (3) étant un dispositif différent du dispositif (1) susceptible d'être porté, en transmettant des données représentant une position tridimensionnelle traduite et/ou une modification de la position tridimensionnelle traduite de l'objet physique à la partie interne de la zone au dispositif d'affichage (3).

10. Procédé conforme à la revendication 9, selon lequel l'objet physique (43) est un doigt.

11. Procédé conforme à la revendication 9 ou 10, selon lequel l'objet tridimensionnel (41) au moins partiellement transparent est un parallélépipède.

12. Procédé conforme à l'une quelconque des revendications 9 à 11, selon lequel l'affichage (25) de l'indication comprend l'affichage de cette indication dans au moins une position qui dépend de la position de l'objet physique (43) à la partie interne de la zone.

13. Procédé conforme à l'une quelconque des revendications 9 à 12, selon lequel l'affichage (25) de l'indication comprend l'affichage de cette indication sur une face de l'objet tridimensionnel (41) au moins partiellement transparent.

14. Procédé conforme à la revendication 13, selon lequel l'affichage (25) de l'indication comprend en outre la détermination de la présence de cette indication qui varie progressivement en fonction de la variation progressive de la distance entre la face de l'objet tridimensionnel (41) au moins partiellement transparent et l'objet physique (43) dans la zone.

15. Produit-programme d'ordinateur permettant à un processeur d'un dispositif susceptible d'être porté conforme à l'une quelconque des revendications 1 à 8, de mettre en œuvre le procédé conforme à l'une quelconque des revendications 9 à 14.
